(19) Europäisches Patentamt
European Patent Office
Office européen des brevets

(11) **EP 1 808 796 B1**

(12) **EUROPEAN PATENT SPECIFICATION**

(45) Date of publication and mention
of the grant of the patent:
**07.10.2009  Bulletin 2009/41**

(51) Int Cl.:
***G06K 7/00*** (2006.01)

(21) Application number: **06124045.3**

(22) Date of filing: **14.11.2006**

(54) **READER FOR RFID AND RFID SYSTEM**

RFID-Leser und RFID-System

Lecteur pour RFID et système RFID

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.01.2006  PCT/KR2006/004789**

(43) Date of publication of application:
**18.07.2007  Bulletin 2007/29**

(73) Proprietor: **Integrant Technologies Inc.**
**Gyeonggi-do 463-810 (KR)**

(72) Inventors:
• **Yang, Kyoung On**
**Gyeonggi-do (KR)**
• **Lee, Jeiyoung**
**Seoul (KR)**

• **Kim, Bonkee**
**c/o Integrant Technologies Inc.**
**Bundang-gu, Seongnam-si**
**Gyeonggi-do (KR)**
• **Kim, Bo-Eun**
**Seongnam-si**
**Gyeonggi-do (KR)**

(74) Representative: **Zech, Stefan Markus et al**
**Meissner, Bolte & Partner GbR**
**Postfach 86 06 24**
**81633 München (DE)**

(56) References cited:
JP-A- 2000 020 651       US-A1- 2002 127 970
US-A1- 2005 093 679

Description

## BACKGROUND OF THE INVENTION

### Field of the Invention

The present invention relates to a reader for radio frequency identification (RFID) and a RFID system, and more particularly, to a reader for RFID and a RFID system improved in reception for RFID using a listen before talk (LBT) mode.

### Description of the Background Art

Bar codes have been commonly and widely used to identify books, records or other related items in libraries and consumer items in supermarkets. Although bar codes can be readily implemented at low cost, they usually have a short read distance and are not reusable. Also, when reading, a reader has to be precisely placed on a bar code-printed surface, and if bar codes are damaged, it is impossible to read the bar codes. Thus, an RFID system is developed to overcome these limitations.

A typical RFID system can read and write wirelessly. Thus, a direct contact or scanning within a visible band is not necessary. Also, many books, records or other items can be identified at the same time in any position or direction. Since electronic tags used in the RFID system have a nearly permanent lifetime, it has been highlighted as an effective tool to establish a ubiquitous system.

An RFID system identifies identification (ID) information on electronic tags that are adhered to items via wireless telecommunications. Particularly, RFID is a combined technology of using electromagnetism or static electricity coupling within a frequency of an electromagnetic spectrum.

Due to RFID standardization, decrease in a unit cost and a widened readable distance, an RFID system has been broadly used in various industrial fields. An antenna, a transceiver and a transponder, which is an electronic tag, are common elements of a typical RFID system.

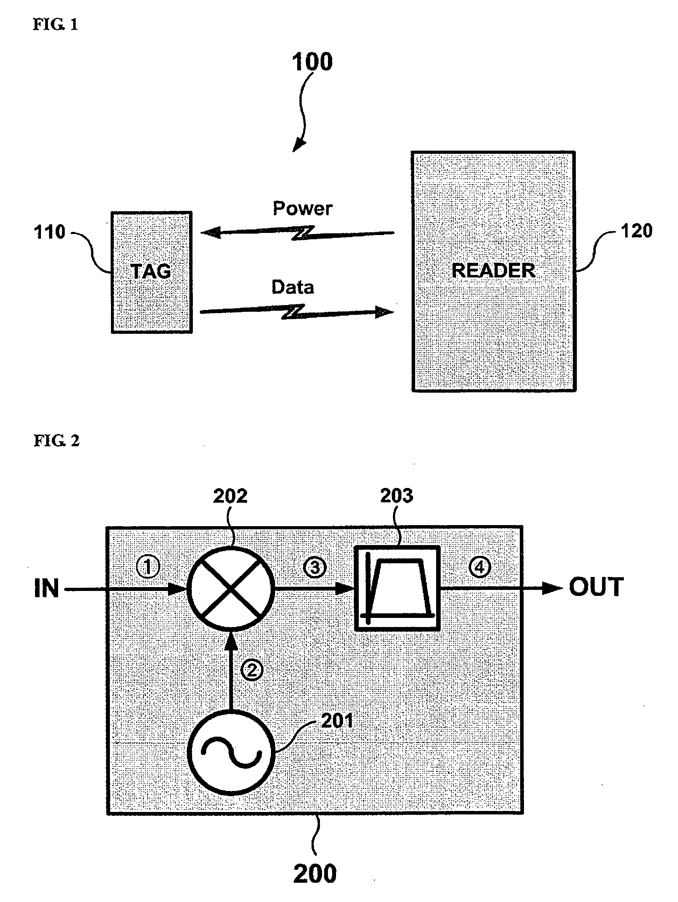

A typical RFID system will be described with reference to FIG. 1 herein below.

FIG. 1 illustrates the configuration of a typical RFID system 100.

The RFID system 100 includes a reader 120 for RFID and an electronic tag 110 with a built-in antenna (not shown).

The reader 120 for RFID continuously sends out electromagnetic waves with a certain frequency.

The electronic tag 110 is wirelessly supplied with power when displaced within a frequency operation range of the reader 120 and becomes activated.

The reader 120 for RFID uses a radio frequency to transmit a signal for activating the electronic tag 110. When the electronic tag 110 is activated, data incorporated within the electronic tag 110 are transmitted to the reader 120 through the antenna.

The electronic tag 110 activated by the supplied power waits for an instruction from the reader 120. If a correct instruction is received, data are transmitted to the reader 120 in response to the receipt.

The reader 120 may transmit data based on an LBT mode or a frequency hopping spread spectrum (FHSS) mode.

An LBT mode is used to avoid an interference between the readers 120. Even though the readers 120 are apart several kilometers away from each other, they may affect each other because the reader 120 has a longer read distance than the electronic tag 110. More specifically, according to the LBT mode, the reader 120 scans a channel that is used prior to the transmission, and transmits data using a channel that is not used to thereby minimize the interference.

That is, the LBT mode is a method of detecting the channel that is not used during the scanning.

A prior art reader for RFID is disclosed by JP 2000 020651. This reader has the drawback that albeit it can detect whether a certain channel is in use or not, it can not measure the level of occupied power of a channel in use.

Also, the reader uses a direct conversion method to minimize the power consumption and the size of the reader. The direct conversion method needs to remove direct current (DC) offset.

However, when DC offset is removed from the reader 120 using the direct conversion method during execution of the LBT mode, reception around a frequency of 0 Hz decreases abruptly, and thus, continuous waves (CW) may not be identified.

## SUMMARY OF THE INVENTION

Accordingly, the present invention is directed to solve at least the problems and disadvantages of the background art.

The present invention is directed to provide a reader for RFID that can minimize decrease in power of an input frequency so as to allow measuring a level of occupied power of a channel that is used during execution of an LBT mode.

According to one embodiment of the present invention, there is provided a reader according to claim 1.

Consistent with the embodiment of the present invention, the filter may comprise a direct current cut-off band that cuts off a DC component of the mixed frequency signal and a pass band at which the mixed frequency passes through.

Consistent with the embodiment of the present invention, the DC cut-off band may include a cut-off frequency less than the offset frequency.

Consistent with the embodiment of the present invention, the pass band includes a cut-off frequency less than a frequency obtained by adding one half of a band of the channel signal and the offset frequency.

Consistent with the embodiment of the present invention, the reader for RFID may further comprise a compensator compensating the intensity of a frequency signal filtered at the filter.

Consistent with the embodiment of the present invention, the compensator comprises an analog-to-digital converter converting the frequency signal filtered at the filter into a digital code, and an intensity indicator mapping the received frequency signal from the analog-to-digital converter with reference to the digital code converted at the analog-to-digital converter.

Consistent with the embodiment of the present invention, the offset frequency is greater than approximately 10 KHz and less than one half of the channel signal band.

Consistent with the embodiment of the present invention, the received signal has a band ranging from approximately 908.5 MHz to 914 MHz.

According to another embodiment of the present invention, there is provided a RFID system comprising a reader for RFID, and an electronic tag.

Detailed features of other embodiments will be provided in the following section of the detailed description of embodiments and the drawings.

Various features and advantages of the present invention and many approaches to achieve those advantages will now be described more fully with reference to the accompanying drawings.

The present invention will be described more fully with reference to the accompanying drawings, in which embodiments of the invention are shown. In the drawings, the same reference numerals in different drawings represent the same element.

## BRIEF DESCRIPTION OF THE DRAWINGS

The accompanying drawings, which are comprised to provide a further understanding of the invention and are incorporated in and constitute a part of this specification, illustrate embodiments of the invention and together with the description serve to explain the principles of the invention. In the drawings:

FIG. 1 illustrates the configuration of a typical RFID system;

FIG. 2 illustrates a reader for RFID according to an embodiment of the present invention;

FIG. 3 illustrates exemplary spectrums to describe sequential operations of detecting power of a channel signal by the reader for RFID according to the embodiment of the present invention; and

FIG. 4 illustrates the configuration of a reader for RFID according to another embodiment of the present invention.

## DETAILED DESCRIPTION OF EMBODIMENTS

A reader for RFID and RFID system according to various embodiments of the present invention will be described in a more detailed manner with reference to the attached drawings.

FIG. 2 illustrates the configuration of a reader 200 for RFID according to an embodiment of the present invention.

The reader 200 includes a frequency oscillator 201, a mixer 202 and a filter 203.

An output terminal of the frequency oscillator 201 is coupled to a second input terminal of the mixer 202. A channel signal IN is inputted to a first input terminal of the mixer 202. An output terminal of the mixer 202 is coupled to an input terminal of the filter 203. A filter frequency is outputted through an output terminal of the filter 203.

Operation of the reader 200 will be described hereinafter.

First, prior to data transmission with an electronic tag (not shown), the reader 200 scans power of a channel that is used and checks which channel is to be used for data transmission. That is, the reader 200 uses an LBT mode to detect a channel that is not used.

A receipt band of the reader 200 ranging from approximately 908.5 MHz to 914 MHz includes about 27 channels.

Each of the channels has a bandwidth of approximately 200 KHz, and a guard band employed to distinguish the individual channels is approximately 50 KHz.

The reader 200 receives power of the channel signal IN having the center at $f_1$.

Second, the frequency oscillator 201 oscillates an oscillating frequency $f_2$ as defined in the following equation.

$$f_2 = f_1 + \Delta f \qquad \text{Eq. 1}$$

Herein, $f_1$, $f_2$ and $\Delta f$ represent a center frequency of the channel signal IN, an oscillating frequency and an offset frequency, respectively.

The frequency oscillator 201 oscillates an oscillating frequency $f_2$ that is offset by the offset frequency $\Delta f$ from the center frequency $f_1$.

The oscillating frequency $f_2$ oscillated at the frequency oscillator 201 is supplied to the second input terminal of the mixer 202. The frequency is to be up converted or down converted at the mixer 202.

Third, a frequency obtained by adding the center frequency $f_1$ and the oscillating frequency $f_2$ is outputted through the output terminal of the mixer 202.

The mixer 202 includes a down-conversion mixer, and outputs a mixed frequency $f_{mix}$ as defined in the equation below.

$$f_{mix} = f_1 - f_2 \qquad \text{Eq. 2}$$

Herein, $f_{mix}$, $f_1$ and $f_2$ represent a frequency mixed at the mixer 202, the center frequency of the channel signal IN and the oscillating frequency, respectively.

As stated in the equation 1, the oscillating frequency $f_2$ is an added value of $f_1 + \Delta f$. Thus, substituting the equation 1 into the equation 2 gives rise to the equation defined as follows.

$$f_{mix} = f_1 - (f_1 + \Delta f) = -\Delta f \qquad \text{Eq. 3}$$

Herein, $f_{mix}$, $f_1$, $f_2$, and $\Delta f$ represent the frequency mixed at the mixer 202, the center frequency of the channel signal IN, the oscillating frequency, and the offset frequency, respectively.

The frequency mixed at the mixer 202 is offset as much as the offset frequency $\Delta f$.

The mixed frequency $f_{mix}$ is inputted to the filter 203.

Last, the filter 203 filters the mixed frequency $f_{mix}$ that is offset as much as the offset frequency $\Delta f$.

The reader 200 is a direct conversion type receiver, and thus, removing DC offset of the received channel signal IN is necessary. The filter 203 removes a DC component of the mixed frequency $f_{mix}$ by a DC cut-off band $f_{cut-off}$.

The filter 203 is designed to filter a specific frequency band $f_{pass}$ to detect the power of the mixed frequency $f_{mix}$. In other words, when the above described operations are executed to detect the power of the channel signal IN inputted to the reader 200, other adjacent channel signals are inputted simultaneously to the reader 200. As a result, power of the other adjacent channels can be detected concurrently.

The filter 203 filters the specific frequency band $f_{pass}$ to correct an error in detecting the power of the channel signal IN. The specific frequency band $f_{pass}$ passing through the filter 203 is variable.

Due to the above-described configuration and operation, power of frequency signals adjacent to the mixed frequency $f_{mix}$ is not detected. Accordingly, the power of the adjacent channels to the target channel is not detected. The power detection is easy since the channel signal to be detected has a small offset.

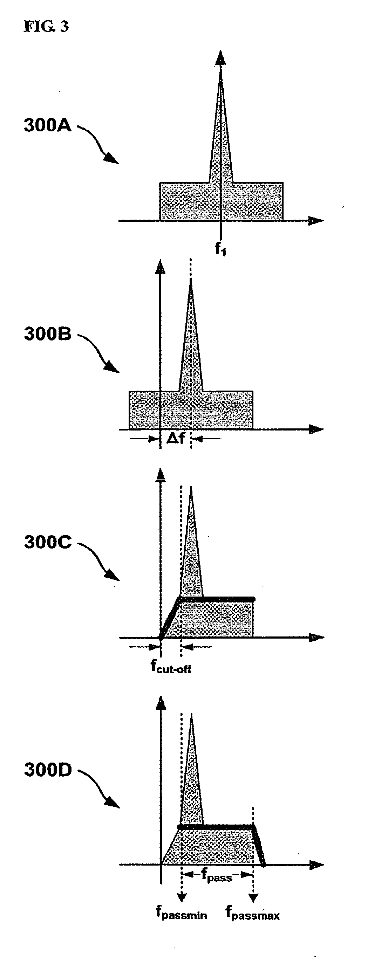

FIG. 3 illustrates exemplary spectrums to describe the power detection operations of the channel signal by the reader according to the embodiment of present invention.

As an initial operation 300A to detect the power of the channel signal IN by the reader 200, the reader 200 receives the channel signal IN.

In operation of 300B, the reader 200 offsets the center frequency $f_1$ of the received channel signal IN by the offset frequency $\Delta f$.

In operation of 300C, the reader 200 removes a DC component of the offset frequency $\Delta f$. Because the reader 200 is a direct down-conversion type receiver, the DC component needs to be removed. More specifically, the filter 203 has a DC cut-off band $f_{cut-off}$ and removes the DC component.

Since high power is generated around the center frequency $f_1$ of the channel signal IN, and the center frequency $f_1$ of the channel signal IN is offset by the offset frequency $\Delta f$ after the frequency conversion, the power of the channel signal IN can be detected without difficulty when the DC component is removed through the filtering.

In operation of 300D, the reader 200 filters a certain band of the channel signal IN to detect the power of the channel signal IN.

In detail, the reader 200 receives channel signals, each generated at 27 channels having a band ranging from approximately 908.5 MHz to 914 MHz. A guard band is placed between the individual channels. Each of the channel signals may include signals from an electronic tag or signals transmitted from another reader. A bandwidth of each of the channel signals is approximately 200K Hz, and the guard band is approximately 50 KHz.

Signals of adjacent channels to the target channel may be detected while a frequency oscillated from the frequency oscillator 201 and the channel signal IN inputted to the reader 200 are mixed.

When the signals of the adjacent channels are detected, the reader 200 may not accurately detect the power of the target channel to be checked by the reader 200.

Thus, the reader 200 needs to have a preset pass band that allows filtering of the channel signal IN with the changed center frequency in order to prevent interference from the adjacent channels.

The pass band is generated variably, and as mentioned above, the pass band plays a role in blocking the interference between the signals from the adjacent channels.

The cut-off frequency of the DC cuff-off band $f_{cut-off}$ is less than the offset frequency $\Delta f$. The cut-off frequency of the pass band $f_{pass}$ is less than a frequency obtained by adding the offset frequency $\Delta f$ and one half of the band at which the channel signal IN is allocated. The offset frequency $\Delta f$ is greater than approximately 10 KHz but less than one half of the band at which channel signal IN is allocated.

On the basis of the above sequential operations, the power of the channel signal received at the reader 200 for RFID can be accurately detected.

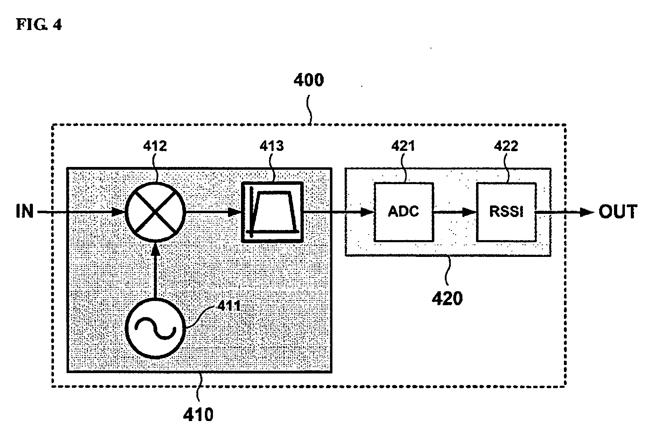

FIG. 4 illustrates the configuration of a reader 400 according to another embodiment of the present invention. As illustrated, the reader 400 that is modified from the reader 200 according to the first described embodiment includes a receiver 410 and a compensator 420.

Since the receiver 410 can be fully understood based on the detailed description provided in FIG. 2, the compensator 420 will be described in detail herein below.

An output of the receiver 410 is inputted to an input terminal of an analog-to-digital converter 421. An output of the analog-to-digital converter 421 is inputted to an input terminal of an intensity indicator 422.

An output signal of the receiver 410 is converted into a digital code using the analog-to-digital converter 421.

The intensity indicator 422 maps the intensity of the received signal using the digital code. In detail, the intensity indicator 422 maps the digital code using an experimentally measured value.

When the power of the channel signal IN is detected, the power of adjacent channels is not detected. Since channel signal IN to be detected has a small offset, the power of the target channel signal IN can be easily detected.

Also, the reader 400 can compensate for the power that is lowered as the channel signal IN is filtered through the analog-to-digital conversion. As a result, accurate and fast detection can be achieved.

According to various embodiment of the present invention, a frequency even with low power that is received at a channel can be easily identified using a reader for RFID that can minimize decrease in the power of a received frequency.

Also, the reader can be minimized, and the power consumption can be reduced.

**Claims**

**1.** A reader (120) for RFID (radio frequency identification) adapted for receiving a channel signal that is used during execution of a LBT (listen before talk) mode, the reader comprising:

a frequency oscillator (201) adapted for generating an oscillating signal, **characterized in that** the oscillating signal oscillates at a frequency that is offset by an offset frequency from a center frequency of the channel signal; the reader further comprsing:
a mixer (202) adapted for mixing the channel signal with the oscillating signal that is offset; and
a filter (203) adapted for filtering a mixed frequency signal provided from the mixer.

**2.** The reader for RFID of claim 1 wherein the filter comprises a DC (direct current) cut-off band for cutting off a DC component of the mixed frequency signal and a pass band at which the mixed frequency passes through.

**3.** The reader for RFID of claim 2, wherein the DC cut-off band includes a cut-off frequency less than the offset frequency.

4. The reader for RFID of claim 3, wherein the pass band includes a cut-off frequency less than a frequency obtained by adding one half of a band of the channel signal and the offset frequency.

5. The reader for RFID of claim 1, further comprising a compensator for compensating the intensity of a frequency signal filtered at the filter.

6. The reader for RFID of claim 5, wherein the compensator comprises:

an analog-to-digital converter for converting the frequency signal filtered at the filter into a digital code; and an intensity indicator for mapping the received frequency signal from the analog-to-digital converter with reference to the digital code converted at the analog-to-digital converter.

7. The reader for RFID of claim 1, wherein the offset frequency is greater than approximately 10 KHz and less than one half of the channel signal band.

8. The reader for RFID of claim 1, wherein the received signal has a band ranging from approximately 908.5 MHz to 914 MHz.

9. A RFID system comprising:

a reader claimed in claim 1; and
an electronic tag.


**Patentansprüche**

1. Lesegerät (120) für RFID (Funkfrequenzidentifikation), das dazu ausgelegt ist, ein Kanalsignal zu empfangen, das während der Ausführung einer LBT-Betriebsart (LBT -*listen before talkL* Empfangen vor Senden) verwendet wird, wobei das Lesegerät aufweist:

einen Frequenzoszillator (201), der dazu ausgelegt ist, ein Schwingungssignal zu erzeugen, **dadurch gekennzeichnet, dass** das Schwingungssignal mit einer Frequenz schwingt, die um eine Versatzfrequenz von einer Mittelfrequenz des Kanalsignals versetzt ist; wobei das Lesegerät darüber hinaus aufweist:
einen Mischer (202), der dazu ausgelegt ist, das Kanalsignal mit dem Schwingungssignal, das versetzt ist, zu mischen; und
ein Filter (203), das dazu ausgelegt ist, ein Mischfrequenzsignal zu filtern, das vom Mischer bereitgestellt wird.

2. Lesegerät für RFID nach Anspruch 1, wobei das Filter ein DC-Sperrband (Gleichstrom-Sperrband) zum Sperren einer DC-Komponente des Mischfrequenzsignals aufweist, und ein Durchlassband, bei dem das Mischfrequenzsignal hindurchgeht.

3. Lesegerät für RFID nach Anspruch 2, wobei das DC-Sperrband eine Sperrfrequenz umfasst, die niedriger ist als die Versatzfrequenz.

4. Lesegerät für RFID nach Anspruch 3, wobei das Durchlassband eine Sperrfrequenz umfasst, die niedriger ist als eine Frequenz, die erhalten wird, indem eine Hälfte eines Bands des Kanalsignals und die Versatzfrequenz addiert wird.

5. Lesegerät für RFID nach Anspruch 1, darüber hinaus einen Kompensator aufweisend, um die Stärke eines am Filter gefilterten Frequenzsignals auszugleichen.

6. Lesegerät für RFID nach Anspruch 5, wobei der Kompensator aufweist:

einen Analog/Digital-Wandler, um das am Filter gefilterte Frequenzsignal in einen Digitalcode umzuwandeln; und einen Stärkeindikator, um das vom Analog/Digital-Wandler empfangene Frequenzsignal in Bezug auf den am Analog/Digital-Wandler umgewandelten Digitalcode abzubilden.

7. Lesegerät für RFID nach Anspruch 1, wobei die Versatzfrequenz höher als ca. 10 KHz und niedriger als eine Hälfte des Kanalsignalbands ist.

**8.** Lesegerät für RFID nach Anspruch 1, wobei das empfangene Signal ein Band hat, das von ca. 908,5 MHz bis 914 MHz reicht.

**9.** RFID-System, das Folgendes aufweist:

ein Lesegerät nach Anspruch 1; und
ein elektronisches Etikett.


**Revendications**

**1.** Lecteur (120) pour RFID (*radio frequency identification*, identification par radiofréquence) apte à recevoir un signal de canal qui est utilisé pendant l'exécution d'un mode LBT (*listen before talk*, recevoir avant d'émettre), le lecteur comprenant :

un oscillateur de fréquence (201) apte à générer un signal oscillant, **caractérisé en ce que** le signal oscillant oscille à une fréquence qui est décalée d'une fréquence de décalage par rapport à une fréquence centrale du signal de canal ; le lecteur comprenant en outre :
un mélangeur (202) apte à mélanger le signal de canal avec le signal oscillant qui est décalé ; et
un filtre (203) apte à filtrer un signal de fréquence mélangée provenant du mélangeur.

**2.** Le lecteur pour RFID selon la revendication 1, où le filtre comprend une bande de coupure à CC (courant continu) permettant de couper un composant CC du signal de fréquence mélangée, et une bande passante à laquelle passe la fréquence mélangée.

**3.** Le lecteur pour RFID selon la revendication 2, où la bande de coupure CC inclut une fréquence de coupure inférieure à la fréquence de décalage.

**4.** Le lecteur pour RFID selon la revendication 3, où la bande passante inclut une fréquence de coupure inférieure à une fréquence obtenue en additionnant une moitié de bande du signal de canal et la fréquence de décalage.

**5.** Le lecteur pour RFID selon la revendication 1, comprenant en outre un compensateur permettant de compenser l'intensité d'un signal de fréquence filtré au niveau du filtre.

**6.** Le lecteur pour RFID selon la revendication 5, où le compensateur comprend :

un convertisseur analogique-numérique permettant de convertir le signal de fréquence filtré au niveau du filtre en un code numérique ; et
un indicateur d'intensité permettant de représenter le signal de fréquence reçu du convertisseur analogique-numérique en référence au code numérique converti au niveau du convertisseur analogique-numérique.

**7.** Le lecteur pour RFID selon la revendication 1, où la fréquence de décalage est supérieure à approximativement 10 KHz et inférieure à la moitié de la bande du signal de canal.

**8.** Le lecteur pour RFID selon la revendication 1, où le signal reçu a une bande comprise entre approximativement 908,5 MHz et 914 MHz.

**9.** Un système RFID comprenant :

un lecteur selon la revendication 1 ; et
une étiquette électronique.

FIG. 1

**100**

110 — TAG

Power

Data

READER — 120

FIG. 2

**202**          **203**

IN    ①    ⊗    ③    ▱    ④    OUT

②

**201**

**200**

**FIG. 3**

**300A**

$f_1$

**300B**

$\Delta f$

**300C**

$f_{cut\text{-}off}$

**300D**

$f_{pass}$

$f_{passmin}$  $f_{passmax}$

**FIG. 4**

**EP 1 808 796 B1**

## REFERENCES CITED IN THE DESCRIPTION

**Patent documents cited in the description**

- JP 2000020651 A